# EUROPÄISCHE PATENTANMELDUNG

(11) **EP 2 693 120 A2**
(43) Veröffentlichungstag der Anmeldung: **05.02.2014**
(21) Anmeldenummer: 13003668.4
(22) Anmeldetag: 22.07.2013
(51) Int. Cl.: F23R 3/00, F23R 3/04, F23R 3/06, F23R 3/60

(54) **Gasturbinenbrennkammer mit Mischluftöffnungen und Luftleitelementen in modularer Bauweise**

(30) Priorität: 03.08.2012 DE 102012015449
(71) Anmelder: Rolls-Royce Deutschland Ltd & Co KG, 15827 Blankenfelde-Mahlow (DE)
(72) Erfinder: Dörr, Thomas, 12167 Berlin (DE); Rackwitz, Leif, 15834 Rangsdorf (DE); Penz, Stefan, 16356 Werneuchen (DE)
(74) Vertreter: Hoefer & Partner

(57) **Zusammenfassung**

Die Erfindung zieht sich auf eine Gasturbinenbrennkammer mit Mischluftöffnungen, mit einer Brennkammerwand 29 sowie mit an der Innenseite der Brennkammerwand 29 angeordneten, von dieser beabstandeten Schindeln 31 sowie mit die Brennkammerwand 29 und die Schindeln 31 durchgreifenden Mischluftöffnungen 30, dadurch gekennzeichnet, dass die Mischluftöffnungen 30 durch Luftleitelemente 32 gebildet sind, welche rohrartig ausgebildet sind und die Schindeln 31 durchgreifen und dass mehrere Luftleitelemente 32 an einem sich zumindest um einen Teil des Umfangs der Brennkammer 15 erstreckenden Mischluftwandelement 42 ausgebildet sind.

## Beschreibung

Die Erfindung bezieht sich auf eine Gasturbinenbrennkammer mit Mischluftöffnungen gemäß dem Oberbegriff des Anspruchs 1.

Im Einzelnen bezieht sich die Erfindung auf eine Gasturbinenbrennkammerwand, in welcher Mischluftöffnungen ausgebildet sind. Dabei sind an der Innenseite der Brennkammerwand, welche an ihrer Innenseite mit Schindeln versehen ist, die Mischluftöffnungen so ausgebildet, dass Mischluft von der Außenseite der Brennkammerwand in den Innenraum der Brennkammer eingeleitet werden kann.

Der Stand der Technik zeigt zur besseren Strömungsführung der Luft Leitbleche (chutes), welche an den Schindeln befestigt sind oder einstückig mit den Schindeln mittels eines Gussverfahrens ausgebildet sind. Diese mit Leitblechen versehenen Schindeln sind an einem Schindelträger befestigt, welcher zur Lagerung an der Brennkammerwand dient.

Bei den aus dem Stand der Technik bekannten Konstruktionen erweist es sich als nachteilig, dass die Verbindung der Leitbleche mit der Schindel sowie die Montage an dem jeweiligen Schindelträger nicht strömungsgünstig ausgebildet ist. Vielmehr ergeben sich scharfkantige, enge Radien, welche zu Strömungsablösungen führen. Diese resultieren wiederum in einem erhöhten Druckverlust und einer verminderten Durchströmung der Zumischöffnungen/Mischluftöffnungen. Durch die aus dem Stand der Technik bekannten Konstruktionen ist es nicht möglich, diese strömungstechnisch zu optimieren.

Ein weiterer Nachteil kann sich daraus ergeben, dass im Bereich der Mischluftöffnungen bzw. Zumischöffnungen keine Abdichtung des Zwischenraums zwischen der Brennkammerwand und den Schindeln möglich ist, so dass ein Teil der Mischluft in den Zwischenraum zwischen der Brennkammerwand und der Schindel einströmt bzw. hierdurch zusätzliche Störungen der gesamten Strömungsführung, auch hinsichtlich der Kühlung der Schindeln, auftreten.

Als nachteilig erweist es sich bei den aus dem Stand der Technik bekannten Brennkammern, dass diese aus einer Vielzahl von Einzelbauteilen zusammengesetzt sind und einen hohen Herstellungs- und Montageaufwand erfordern. Zudem können die Strömungsverhältnisse, insbesondere hinsichtlich der Strömungsführung der Mischluft nicht immer optimal ausgebildet werden.

Der Erfindung liegt die Aufgabe zugrunde, eine Gasturbinenbrennkammer der eingangs genannten Art zu schaffen, welche bei einfachem Aufbau und einfacher, kostengünstiger Herstellbarkeit einen optimierten Aufbau mit einfacher Montage und eine gute Mischluftströmungsführung unter Vermeidung der Nachteile des Standes der Technik ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit insbesondere vorgesehen, dass mehrere Luftleitelemente an einem sich zumindest um einen Teil des Umfangs der Brennkammer erstreckenden Mischluftwandelement ausgebildet sind. Die mehreren Luftleitelemente können somit einstückig mit dem Mischluftwandelement hergestellt werden. Die Erfindung ermöglicht die Ausbildung einer Ringkonstruktion der gesamten Brennkammer, wobei die einzelnen Mischluftwandelemente, welche sowohl an der Brennkammeraußenwand als auch an der Brennkammerinnenwand vorgesehen sind, sich über einen Teil des Umfangs der Brennkammer erstrecken und somit Kreissegmente bilden. Hierdurch vereinfacht sich auch die Konstruktion der Brennkammer. Es ergeben sich insbesondere auch im Hinblick auf die Gesamtstabilität der Brennkammer Vorteile.

Die Mischluftwandelemente mit den Luftleitelementen können beispielsweise als Gussteile oder in geschweißter Ausführung hergestellt werden.

Besonders günstig ist es, wenn die mehreren Luftleitelemente einreihig an den Mischluftwandelementen angeordnet sind und sich somit in Umfangsrichtung erstrecken. Durch die erfindungsgemäße Ausgestaltung ist es möglich, eine Vielzahl eng benachbarter Luftleitelemente vorzusehen. Hierdurch können zur Zuleitung einer größeren Luftmenge eine größere Anzahl von Luftleitelementen vorgesehen werden und/oder die einzelnen Luftleitelemente, welche eine Belochungsreihe bilden können, jeweils mit einem kleineren Durchmesser versehen sein, da, im Vergleich zum Stand der Technik, eine größere Anzahl derartiger Luftleitelemente vorgesehen sein kann. Es ergibt sich somit ein verbesserter Durchflusskoeffizient, so dass insgesamt die Mischluftzuführung optimaler gestaltet werden kann.

Erfindungsgemäß können die mehreren Luftleitelemente senkrecht zur Brennkammerwand oder in einem Winkel zu dieser angeordnet sein. Auch hierdurch kann die Mischluftzuführung der Brennkammer verbessert werden.

Ein weiterer Vorteil der erfindungsgemäßen Ausgestaltung, bei welcher die Luftleitelemente einstückig mit dem jeweiligen Mischluftwandelement ausgebildet sind, besteht darin, dass das Auftreten einer Leckageströmung im Bereich der Luftleitelemente vermieden werden kann oder zumindest erheblich reduziert werden kann. Falls eine Leckageströmung auftritt, so würde die an einem Übergangsbereich zwischen einem Mischluftwandelement und einem die Schindeln tragenden Schindelträgerwandelement auftreten. Dort ist eine Leckageströmung weniger kritisch und für das gesamte Strömungsverhalten nicht so erheblich.

Wie erwähnt, können die mit den Luftleitelementen versehenen Mischluftwandelemente mittels eines Gussverfahrens oder eines Fügeverfahrens (Schweißen) hergestellt werden. Es ist jedoch auch möglich, diese mittels eines Umformverfahrens zu erzeugen. Somit kann eine optimierte Bauteilfestigkeit realisiert werden, welche einen geringen Herstellungsaufwand erfordert.

Durch die erfindungsgemäße Konstruktion ergibt sich die Möglichkeit, die gesamte Brennkammer aus Ringsegmenten aufzubauen, wobei am einströmseitigen Bereich in einfacher Weise ein Brennkammerkopf mit den benachbarten ringsegmentartigen Schindelträgerwandelementen verschraubt werden kann. Die Mischluftzone wird erfindungsgemäß somit integral ausgebildet.

Erfindungsgemäß ist somit vorgesehen, dass die Mischluftöffnungen durch Luftleitelemente gebildet sind, welche rohrartig ausgebildet sind und an der Brennkammerwand befestigt sind und die Schindeln durchgreifen.

Erfindungsgemäß ist somit eine Möglichkeit geschaffen, die Luftleitelemente direkt an den Mischluftwandelementen auszubilden. Bedingt durch diese konstruktive Lösung ist es möglich, größere Krümmungsradien am Einlaufbereich der Zumischöffnungen bzw. der Luftleitelemente zu realisieren. Diese Möglichkeit besteht bei den aus dem Stand der Technik bekannten Konstruktionen nicht.

Ein weiterer, wesentlicher Vorteil der erfindungsgemäßen Lösung besteht darin, die Luftleitelemente rohrartig auszubilden, beispielsweise mittels eines Gussverfahrens, eines Umformverfahrens oder eines Fügeverfahrens. Somit ist die Herstellung und Montage der Luftleitelemente (chutes) unabhängig von der Brennkammerwand und den Schindeln. Es ist auch möglich, die Luftleitelemente aus geeigneten Materialien zu fertigen, welche sich von den Materialien der Brennkammerwand und der Schindeln unterscheiden können.

Erfindungsgemäß ist es besonders günstig, wenn die Luftleitelemente mit einem strömungsoptimierten Einströmbereich versehen sind. Bei einem im Wesentlichen rohrförmigen Luftleitelement ist es möglich, den Einströmbereich ringartig, beispielsweise trichterartig oder mit gerundetem Querschnitt auszubilden. Dabei kann der Einströmbereich, bezogen auf eine Mittelachse des Luftleitelements, auch asymmetrisch ausgebildet sein, so dass ein strömungsgünstig optimierter Mischlufteinlass in die Luftleitelemente ermöglicht wird.

In besonders günstiger Ausgestaltung ist somit vorgesehen, dass das Luftleitelement mit einem dichtend mit der Brennkammerwand und/oder der Schindel in Kontakt befindlichen Flansch oder einer Borde versehen ist, nämlich dem Mischluftwandelement. Hierdurch wird die Möglichkeit geschaffen, die Luftleitelemente in optimaler Weise an der Brennkammer zu montieren und insbesondere im Bereich der Luftleitelemente eine maximale Festigkeit der Brennkammerwand zu gewährleisten.

Es ist erfindungsgemäß somit möglich, mehrere Luftleitelemente in ringförmiger oder teilringförmiger Anordnung zusammenzufassen und als gemeinsames Bauelement (Mischluftwandelement) auszubilden, welches nachfolgend mittels eines Fügeverfahrens mit der Brennkammerwand verbunden wird.

Durch die erfindungsgemäß vorgesehene Ausgestaltung der Luftleitelemente und deren konstruktiver Befestigung an der Brennkammerwand bzw. am Schindelträger ist es somit möglich, die Luftführung der Zumischluft am Einlaufbereich der Luftleitelemente zu optimieren, insbesondere durch größere Krümmungsradien des Einströmbereichs der einzelnen Luftleitelemente. Somit kann erfindungsgemäß eine Strömungsablösung reduziert oder vermieden werden. Dies wiederum führt zu dem Vorteil, dass Druckverluste bei der Zuführung der Mischluft reduziert werden. Hierdurch ergibt sich eine effektive Ausnutzung bei der Durchströmung der Mischluftöffnungen. Durch diese Optimierung wiederum ist es erfindungsgemäß möglich, kleinere Durchmesser der Mischluftöffnungen vorzusehen und/oder einen erhöhten Impuls der zugeführten Mischluft für den Mischprozess innerhalb der Brennkammer zu realisieren. Dies wiederum führt zu verbesserten Strömungsverhältnissen und Verbrennungsverhältnissen in der Brennkammer, wodurch Schadstoffe reduziert werden können. Weiterhin ist es möglich, den Gesamtdruckverlust in der Brennkammer zu reduzieren und/oder das Temperaturprofil am Brennkammeraustritt zu verbessern.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine perspektivische Teilansicht einer weiteren Variante eines Gasturbinentriebwerks gemäß der vorliegenden Erfindung,
- Fig. 3: eine vergrößerte Schnittansicht eines Teilbereichs der Brennkammerwand mit Luftleitelementen,
- Fig.4: eine Draufsicht, in radialer Richtung, auf die Innenseite der erfindungsgemäßen Brennkammer,
- Fig. 5: eine Draufsicht, analog Fig. 4, auf die Außenseite der Brennkammer,
- Fig. 6: eine Ansicht, in radialer Richtung, auf die Innenseite der erfindungsgemäßen Brennkammer analog Fig. 4,
- Fig. 7: eine Schnittansicht längs der Linie B-B von Fig. 6,
- Fig. 8: eine Schnittansicht längs der Linie D-D von Fig. 6,
- Fig. 9: eine Schnittansicht längs der Linie C-C von Fig. 7,
- Fig. 10: eine Ansicht, ähnlich Fig. 7, bei welcher die Mittelachse des Luftleitelements geneigt ist,
- Fig. 11: eine schematische Darstellung des Luftleitelements in einem weiteren Ausführungsbeispiel, mit zusätzlichem Effusionsloch,
- Fig. 12: eine Schnittansicht, analog Fig. 7, der Ausgestaltung nach dem Stand der Technik,
- Fig. 13: eine perspektivische Teilansicht eines ersten Ausführungsbeispiels eines erfindungsgemäßen Mischluftwandelements mit Luftleitelement,
- Fig. 14: eine Ansicht, analog Fig. 13, der in Fig. 13 gezeigten Unterseite,
- Fig. 15: eine Schnittansicht der in den Fig. 13 und 14 gezeigten Mischluftwandelemente mit Schindelträgerwandelementen,
- Fig. 16-18: Ansichten eines weiteren Ausführungsbeispiels analog den Fig. 13 bis 15,
- Fig. 19: eine vergrößerte Darstellung der erfindungsgemäßen Brennkammer gemäß dem in den Fig. 13 bis 15 gezeigten Ausführungsbeispiel mit Brennkammerkopf,
- Fig. 20-21: eine Außenansicht und eine Innenansicht der erfindungsgemäßen Mischluftwandelemente im montierten Zustand, und
- Fig. 22: eine perspektivische Ansicht eines Brennkammermoduls.

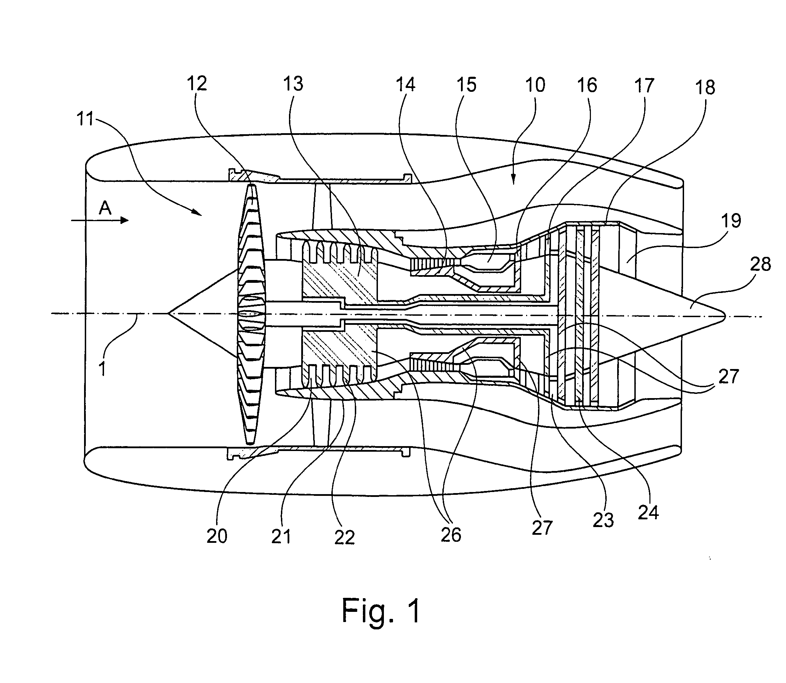

Das Gasturbinentriebwerk 10 gemäß Fig. 1 ist ein allgemein erstelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

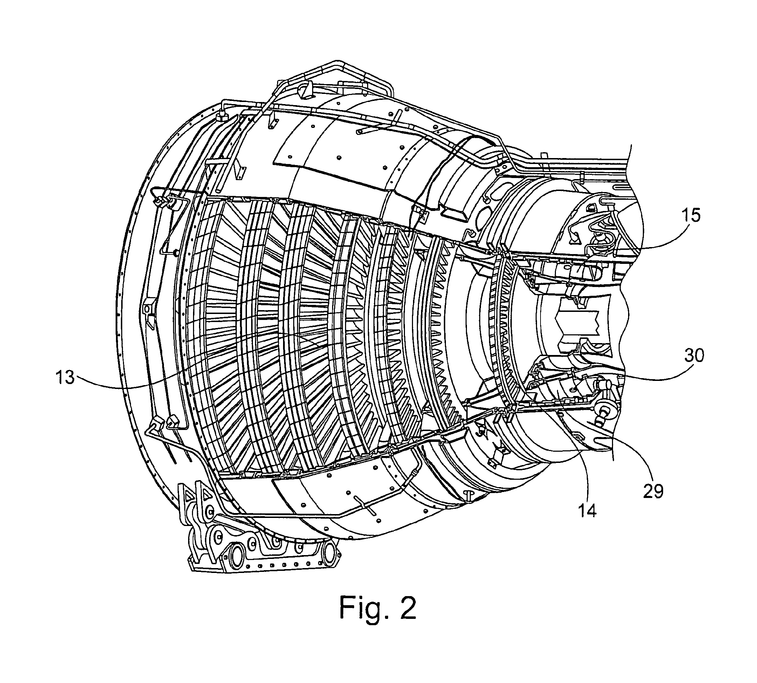

Die Fig. 2 zeigt eine perspektivische Teil-Schnittansicht eines erfindungsgemäßen Gasturbinentriebwerks. Dabei ist insbesondere die Lage der Brennkammer 15 ersichtlich. Weiterhin zeigt die Fig. 2 eine Brennkammerwand 29 mit Mischluftöffnungen 30, durch welche Mischluft in den Innenraum der Brennkammer geleitet wird.

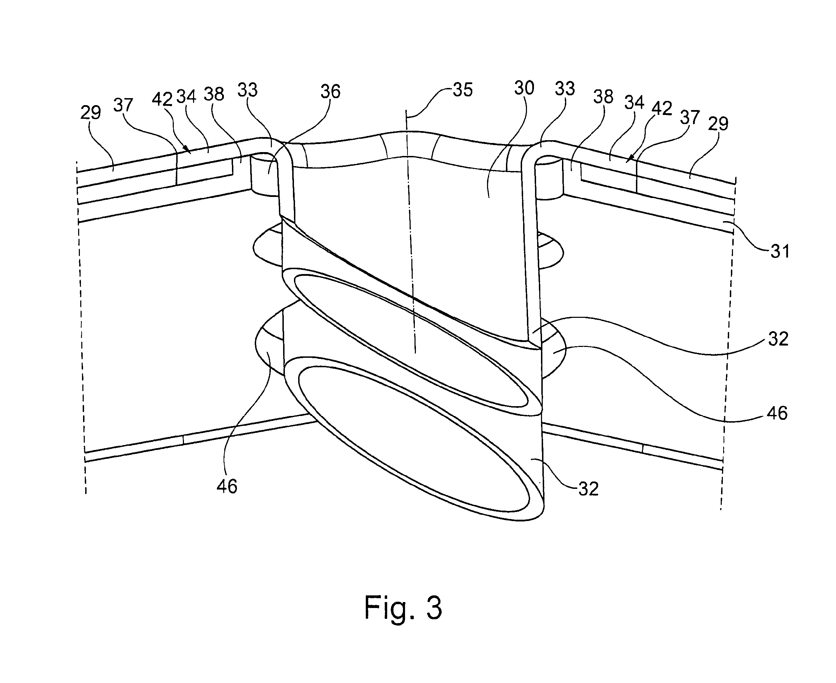

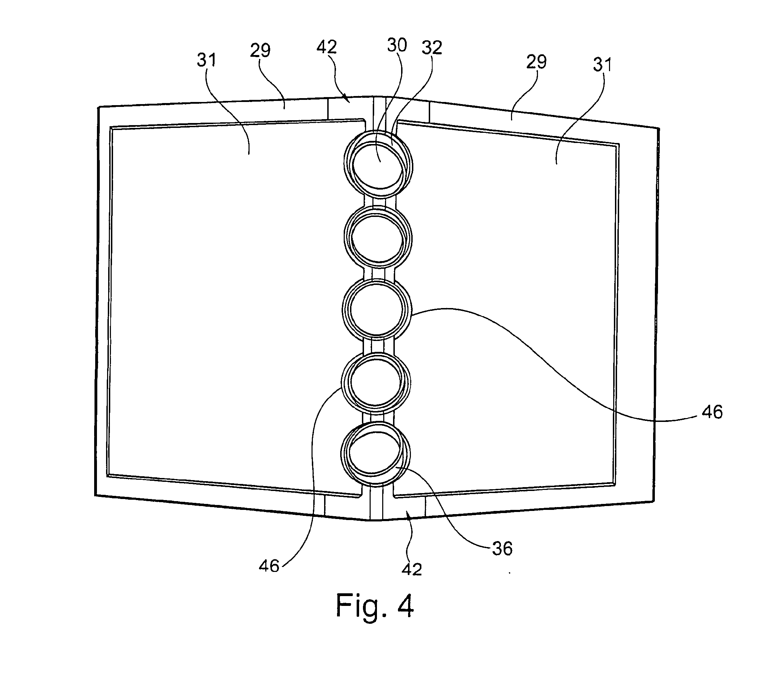

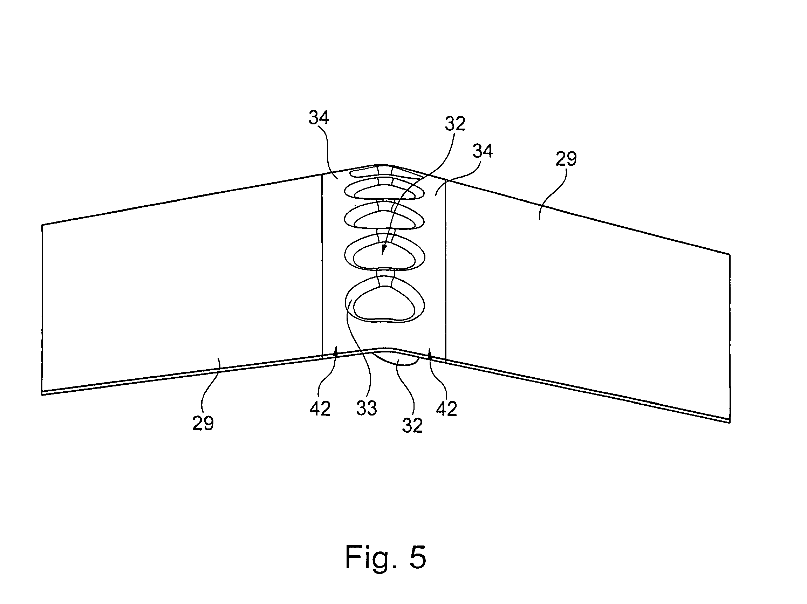

Die Fig. 3 zeigt eine vergrößerte Teil-Schnittansicht eines Ausführungsbeispiels eines erfindungsgemäßen Luftleitelements 32. Dieses ist rohrförmig ausgebildet und weist einen Flansch 34 auf, welcher ringförmig oder rechteckig ausgebildet sein kann. Bei dem in den Fig. 4 und 5 gezeigten Ausführungsbeispiel ist der Flansch 34 in Form eines flachen Streifens ausgebildet und zu einer durch die Mittelachse 35 gebildeten Ebene abgewinkelt, so wie dies insbesondere aus Fig. 5 ersichtlich ist. Der Flansch/Steg 34 ist Teil eines nachfolgend beschriebenen Mischluftwandelements 42.

Insbesondere die Fig. 3 zeigt deutlich, dass das Luftleitelement 32 an seinem Einströmbereich 33 mit einem abgerundeten, strömungsoptimierten Querschnitt versehen ist. Erfindungsgemäß ist eine Schindelöffnung 36, welche bevorzugterweise kreisringförmig ausgebildet ist, im Durchmesser größer als das Luftleitelement 32. Somit ist ein ausreichender Freiraum gegeben, um die strömungsgünstige Abrundung oder anderweitige Ausgestaltung des Einströmbereichs 33 zu ermöglichen.

Die Fig. 3 zeigt, dass der jeweilige Flansch 34, der Teil des Mischluftwandelements 42 ist, stumpf mit einem Randbereich der jeweiligen Brennkammerwand 29 (Schindelträger) gefügt ist. Dieser Fügebereich 37 ist somit strömungstechnisch optimiert und bildet keinen Strömungswiderstand.

Weiterhin zeigt die Fig. 3, dass eine jeweilige Schindel 31 einen Flansch 38 aufweist, welcher dichtend gegen das Mischluftwandelement 42 beziehungsweise den Flansch 34 des Luftleitelements 32 anliegt. Hierdurch wird vermieden, dass unerwünschte Luftströmungen in den Bereich zwischen der Schindel 31 und der Brennkammerwand 29 eintreten bzw. dass die dort zur Kühlung eingebrachten Luftvolumina in unerwünschter Weise im Bereich des Luftleitelements 32 austreten.

Das Mischluftwandelement 42 besteht somit aus den Luftleitelementen 32, dem Flansch 34 und dem Einströmbereich 33.

Die Fig. 4 zeigt eine Ansicht von der Innenseite der Brennkammer aus, somit eine Ansicht auf die heiße Seite der Brennkammerwand. Die Darstellung der Fig. 4 verdeutlicht die Anordnung und Ausbildung der jeweiligen Luftleitelemente 32 sowie des Mischluftwandelements 42. Hierbei ist ersichtlich, dass die benachbarten Schindeln 31 jeweils mit halbkreisförmigen Ausnehmungen 36 versehen sind, um die mehreren an einem gemeinsamen Mischluftwandelement 42 befestigten Luftleitelemente 32 zu umschließen.

Die Fig. 5 zeigt eine Ansicht, analog den Fig. 3 und 4 von der Außenseite der Brennkammer, somit von der kalten Seite aus. Hierbei ist insbesondere nochmals verdeutlicht, dass die beiden Flansche 34 einen Winkel zueinander bilden, so dass es möglich ist, eine geeignete Brennkammerkonstruktion mit abgewinkelten Schindeln 29 zu realisieren.

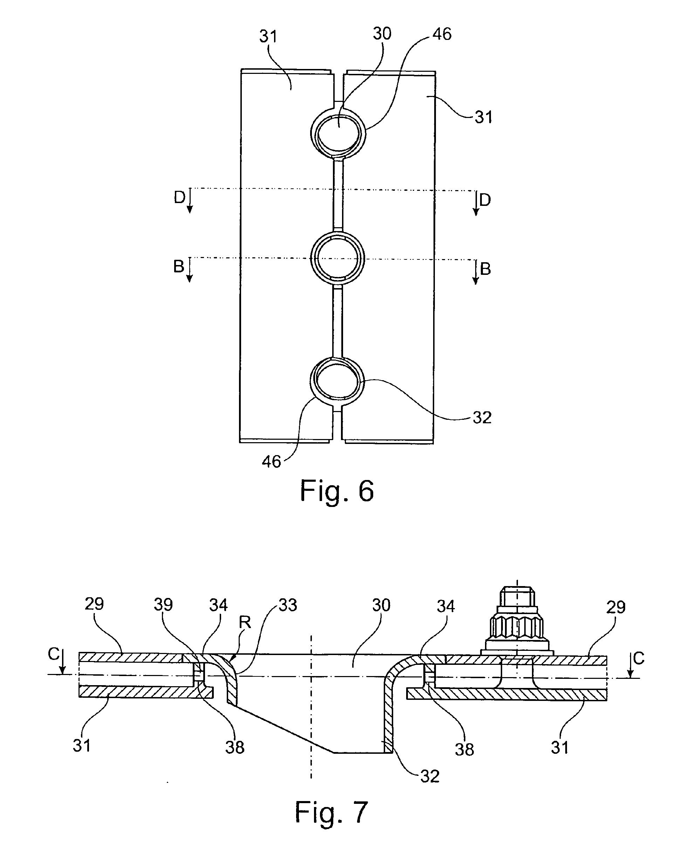

Die Fig. 6 zeigt eine Ansicht analog Fig. 4. Dabei ergibt sich, dass die Dimensionierung und Zuordnung der Schindeln 31 zu den Mischluftöffnungen 30 bzw. den Luftleitelementen 32 in geeigneter Weise erfolgen kann. Hierdurch lassen sich sowohl die Anordnung als auch die Dimensionierung der Luftleitelemente 32 den jeweiligen räumlichen Gegebenheiten anpassen.

Die Fig. 7 zeigt eine Schnittansicht längs der Linie B-B gemäß Fig. 6. Dabei ist insbesondere ersichtlich, dass der Einströmbereich 33 abgerundet und mit einem relativ großen Radius versehen sein kann. Da erfindungsgemäß die Möglichkeit gegeben ist, einen großen Flansch 34 des Mischluftwandelements 42, vorzusehen, kann eine gute Abdichtung gegenüber dem Flansch 38 der Schindel 31 erfolgen.

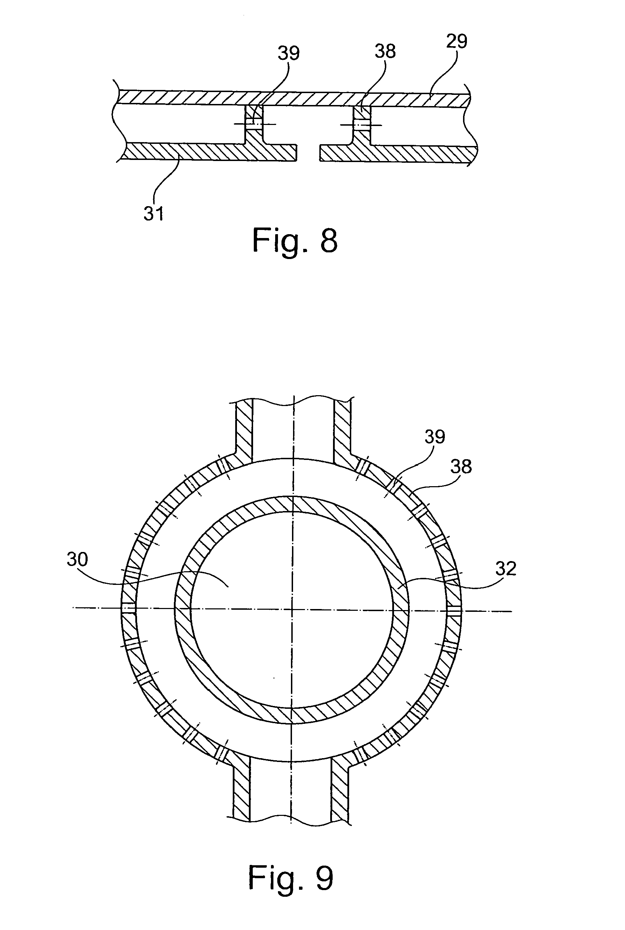

Die Fig. 8 zeigt eine Schnittansicht längs der Linie D-D von Fig. 6. Dabei sind verdeutlichend Ausnehmungen 39 im Flansch oder Steg 38 der Schindel 31 dargestellt, durch welche Kühlluft in den Zwischenbereich zwischen der Schindel 31 und der Brennkammerwand 29 eintreten bzw. aus diesem austreten kann.

Die Schnittansicht, welche in Fig. 9 dargestellt ist, zeigt die räumliche Zuordnung des Luftleitelements 32 und des Flansches 38. Dabei ergibt sich, dass die erfindungsgemäße Ausgestaltung insbesondere hinsichtlich der thermischen Ausdehnungen und Kontraktionen besonders vorteilhaft ist, da eine spannungsfreie Gesamtkonstruktion ermöglicht wird.

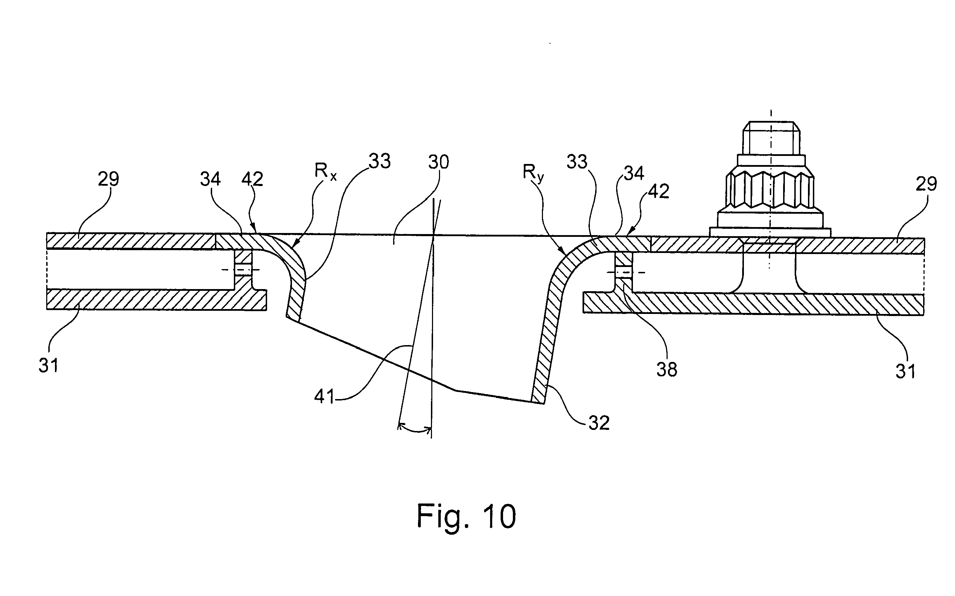

Die Fig. 10 zeigt eine Darstellung analog der Fig. 7. Sie verdeutlicht, dass es erfindungsgemäß auch möglich ist, das Luftleitelement 32 (chute) hinsichtlich seiner Mittelachse in einem Winkel anzuordnen, so dass sich unterschiedliche Radien an den Einströmbereichen 33 ergeben (Radien Rx und Ry). Es können sich somit um den Umfang unterschiedliche Radien ergeben. Diese können auch vorliegen, wenn die Mittelachse 41 nicht zur Tangentialebene der Brennkammerschindeln 31 geneigt angeordnet ist.

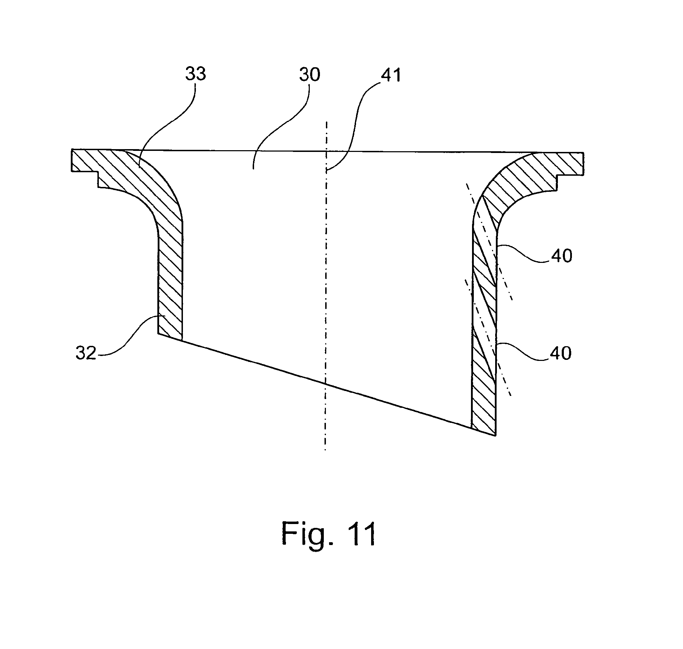

Die Fig. 11 zeigt eine weitere Variante des erfindungsgemäßen Luftleitelements 32, bei welcher zusätzliche Effusionsausnehmungen 40 vorgesehen sind, welche zur Kühlung der Brennkammerschindeln 31 dienen.

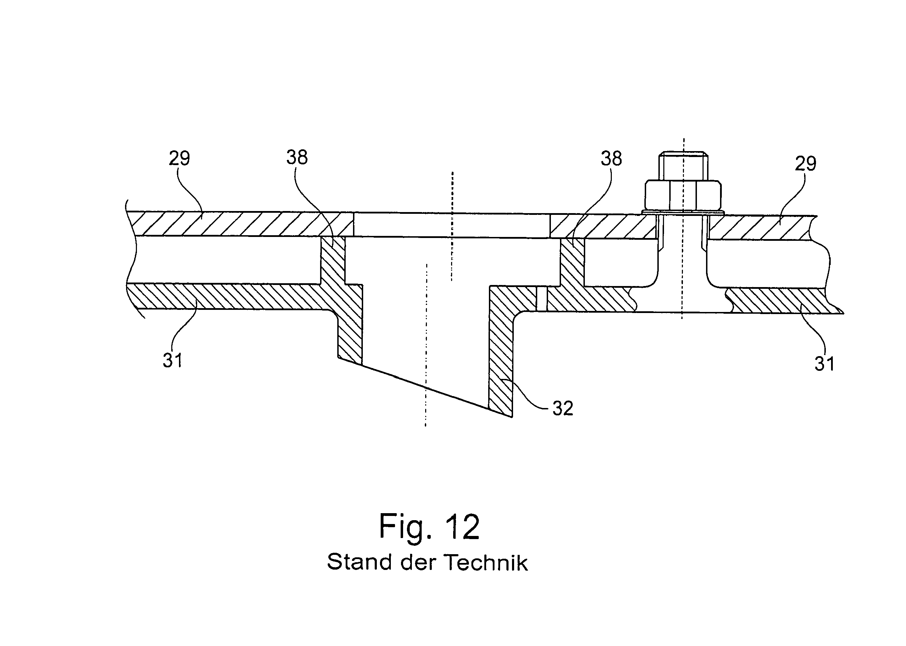

Die Fig. 12 zeigt im Vergleich zur der Darstellung der Fig. 7 eine Ausgestaltung gemäß dem Stand der Technik. Dabei ist insbesondere ersichtlich, dass der Einströmbereich der Luftleitelemente 32 strömungstechnisch ungünstiger und schwieriger zu optimieren ist als bei der erfindungsgemäßen Lösung.

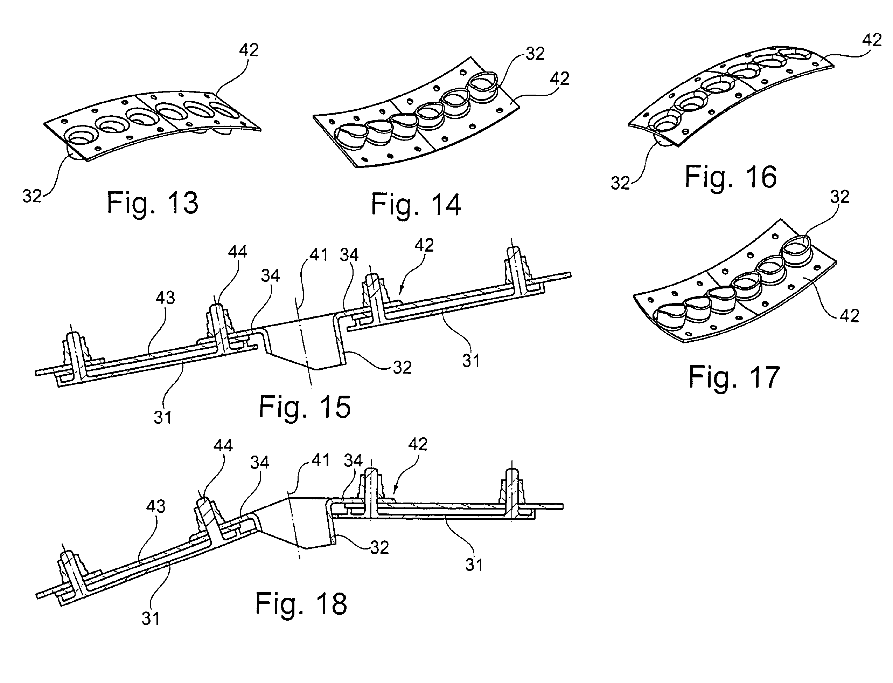

Die Fig. 13 bis 15 zeigen ein Ausführungsbeispiel, bei welchem ein kreissegmentartiges Mischluftwandelement 42 so ausgebildet ist, dass sich die Mittelachse 41 des Luftleitelements 32 im rechten Winkel zu der jeweiligen Schnittebene (siehe Fig. 15) erstreckt. Insgesamt sind die Mischluftwandelemente 42 in Form von Ringsegmenten ausgebildet, so dass sie nebeneinander angeordnet und entsprechend montiert eine äußere Brennkammerwand beziehungsweise eine innere Brennkammerwand in Form eines Ringelements bilden. Das Ausführungsbeispiel der Fig. 13 bis 15 zeigt eine Variante, bei welcher die beiden Flanschbereiche 34 in einer Ebene zueinander angeordnet sind. Bei dem Ausführungsbeispiel der Fig. 16 bis 18 sind die Flanschbereiche 34 hinsichtlich ihrer Mittelebenen winkelig zueinander, dass sich ein abgeknickter oder abgewinkelter Teilbereich einer Brennkammerwand ausbilden lässt.

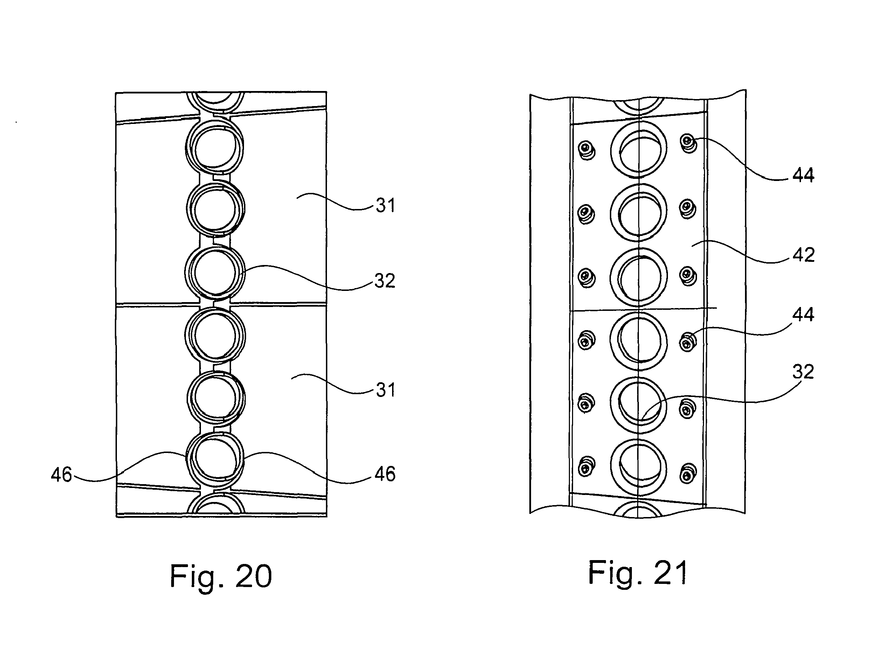

Die Fig. 13 bis 18 zeigen weiterhin, dass die Mischluftwandelemente 42 jeweils mit Ausnehmungen versehen sind, durch welche Schrauben 44 durchgeführt werden können, um die Mischluftwandelemente 42 mit benachbarten Schindelträgerwandelementen 43 zu verschrauben. Eine derartig verschraubte Anordnung zeigen die Fig. 20 und 21. Dabei ist ersichtlich, dass die jeweiligen Schindeln 31 mit teilrunden Ausnehmungen 46 ihres Randbereichs versehen sind, um eine möglichst dichte Anlage an die Luftleitelemente 32 zu ermöglichen.

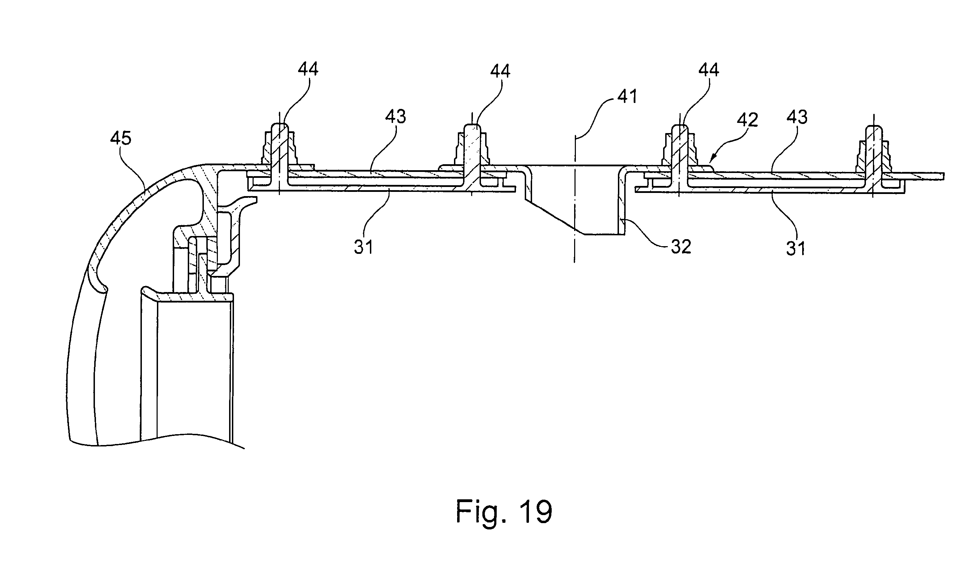

Die Fig. 19 zeigt eine vergrößerte Teil-Ansicht eines Axialschnitts einer Brennkammer analog dem Ausführungsbeispiel der Fig. 13 bis 15 mit einem montierten Brennkammerkopf 45, welcher erfindungsgemäß ebenfalls in einfacher Weise mittels Schrauben 44 mit dem angrenzenden Schindelträgerwandelement 43 verbunden ist.

Es ergibt sich somit, dass die einzelnen Mischluftwandelemente und die einzelnen Schindelträgerwandsegmente jeweils als Kreisringsegmente ausgebildet sind, aus denen die gesamte Brennkammerwandung mit den zugehörigen Schindeln aufgebaut ist.

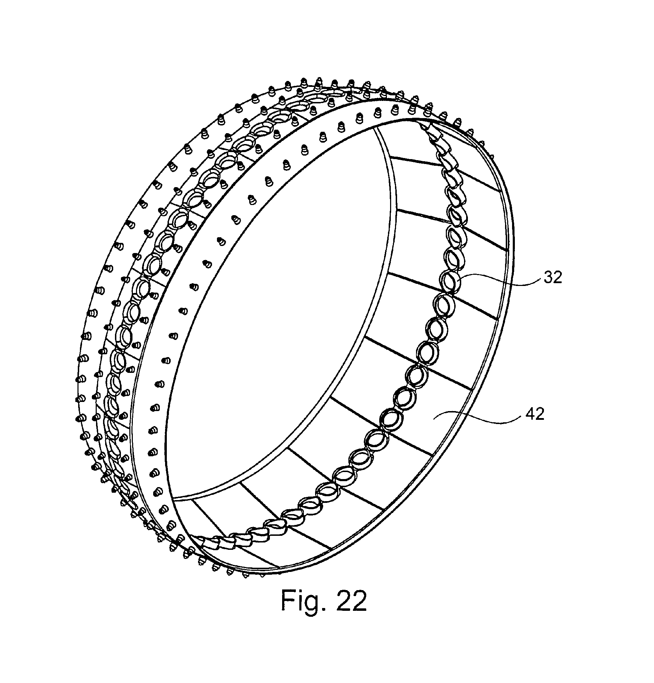

Die Fig. 22 zeigt eine perspektivische Ansicht eines Brennkammermoduls, welches ringförmig ausgebildet ist und aus den erfindungsgemäßen Mischluftwandelementen 42 aufgebaut ist.

### Bezugszeichenliste:

- 1: Triebwerksachse
- 10: Gasturbinentriebwerk/Kerntriebwerk
- 11: Lufteinlass
- 12: im Gehäuse umlaufender Fan
- 13: Mitteldruckkompressor
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslaufskonus
- 29: Brennkammerwand
- 30: Mischluftöffnung
- 31: Schindel
- 32: Luftleitelement/chute
- 33: Einströmbereich
- 34: Flansch / Steg
- 35: Mittelachse
- 36: Schindelöffnung
- 37: Fügebereich
- 38: Flansch /Steg der Schindel
- 39: Ausnehmung
- 40: Effusionsausnehmung
- 41: Mittelachse
- 42: Mischluftwandelement
- 43: Schindelträgerwandelement/Schindelträgerwandsegment
- 44: Schraube
- 45: Brennkammerkopf
- 46: Ausnehmung

## Patentansprüche

1. Gasturbinenbrennkammer mit Mischluftöffnungen, mit einer Brennkammerwand (29) sowie mit an der Innenseite der Brennkammerwand (29) angeordneten, von dieser beabstandeten Schindeln (31) sowie mit die Brennkammerwand (29) und die Schindeln (31) durchgreifenden Mischluftöffnungen (30), **dadurch gekennzeichnet, dass** die Mischluftöffnungen (30) durch Luftleitelemente (32) gebildet sind, welche rohrartig ausgebildet sind und die Schindeln (31) durchgreifen und dass mehrere Luftleitelemente (32) an einem sich zumindest um einen Teil des Umfangs der Brennkammer (15) erstreckenden Mischluftwandelement (42) ausgebildet sind.

2. Gasturbinenbrennkammer nach Anspruch 1, **dadurch gekennzeichnet, dass** das Mischluftwandelement (42) kreissegmentartig ausgebildet ist.

3. Gasturbinenbrennkammer nach Anspruch 1 oder 2, **dadurch gekennzeichnet, dass** die Mischluftwandelemente (42) mit benachbarten Schindelträgerwandelementen (43) verbunden sind.

4. Gasturbinenbrennkammer nach Anspruch 3, **dadurch gekennzeichnet, dass** die Mischluftwandelemente (42) mittels Schrauben mit den Schindelträgerwandelementen (43) verbunden sind.

5. Gasturbinenbrennkammer nach Anspruch 3, **dadurch gekennzeichnet, dass** die Mischluftwandelemente (42) mit den Schindelträgerwandelementen (43) mittels eines Schweißverfahrens verbunden sind.

6. Gasturbinenbrennkammer nach einem der Ansprüche 1 bis 5, **dadurch gekennzeichnet, dass** die Mischluftwandelemente (42) als Gussteile gefertigt sind.

7. Gasturbinenbrennkammer nach einem der Ansprüche 1 bis 6, **dadurch gekennzeichnet, dass** die Luftleitelemente (32) in Umfangsrichtung einreihig angeordnet sind.

8. Gasturbinenbrennkammer nach einem der Ansprüche 1 bis 7, **dadurch gekennzeichnet, dass** an den Schindelträgerwandelementen (43) zu diesen beabstandet Schindeln (31) angeordnet sind.

9. Gasturbinenbrennkammer nach einem der Ansprüche 1 bis 8, **dadurch gekennzeichnet, dass** die Mischluftwandelemente (42) und die Schindelträgerwandelemente (43) jeweils in Umfangsrichtung der Brennkammer (15) verlaufende Ringe oder Ringsegmente bilden, welche in Axialrichtung nebeneinander angeordnet und mit einem Brennkammerkopf (45) verbunden sind.

10. Gasturbinenbrennkammer nach einem der Ansprüche 1 bis 9, **dadurch gekennzeichnet, dass** die Luftleitelemente (32) mit einem abgerundet ausgebildeten strömungsoptimierten Einströmbereich (33) versehen sind.
